# FASCICULE DE BREVET EUROPEEN

(11) **EP 1 347 947 B1**
(45) Date de publication et mention de la délivrance du brevet: **31.08.2011**
(21) Numéro de dépôt: 01997185.2
(22) Date de dépôt: 21.11.2001
(51) Int. Cl.: C03C 17/36

(54) **SUBSTRAT TRANSPARENT AYANT UN EMPILEMENT DE COUCHES MINCES A REFLEXION METALLIQUE**
TRANSPARENTES SUBSTRAT MIT EINEM STAPEL DÜNNER METALLISCHER REFLEXIONSSCHICHTEN
TRANSPARENT SUBSTRATE HAVING A STACK OF THIN METALLIC REFLECTION LAYERS

(30) Priorité: 25.11.2000 DE 10058700
(43) Date de publication de la demande: 01.10.2003
(73) Titulaire: SAINT-GOBAIN GLASS FRANCE, 92400 Courbevoie (FR)
(72) Inventeur: SCHICHT, Heinz, 06925 Bethau (DE); SCHINDLER, Herbert, 04860 Torgau (DE); SCHMIDT, Uwe, 04895 Falkenberg (DE); MAROLD, Axel, 04860 Süptitz (DE)
(74) Mandataire: Muller, René
(86) Numéro de dépôt international: PCT/FR2001/003657
(87) Numéro de publication internationale: WO 2002/042234

(56) Documents cités:
- EP-A- 0 546 470
- EP-A- 0 779 255
- EP-A- 0 962 429
- US-A- 4 900 630
- US-A- 5 085 926

## Description

L'invention se rapporte à un substrat transparent ayant un empilement de couches minces à réflexion métallique, à résistance thermique élevée, en particulier ces substrats sont adaptés pour être traités thermiquement (bombage, trempe, recuit), sans que l'aspect et les propriétés optiques des couches ne soient pas significativement altérés.. L'empilement comprend une couche de base diélectrique, une couche métallique à réflexion élevée, en chrome ou en un alliage métallique contenant au moins 45% en poids de chrome, et une couche de recouvrement nitrurée diélectrique. Cependant, l'invention s'intéresse aussi aux « vitrages » où le substrat porteur de l'empilement est transparent mais non verrier, notamment un substrat rigide du type polyéthylènetéréphtalate PET, donc à base de polymères organiques.

Des substrats revêtus de cette manière ayant une réflexion métallique élevée et une transmission lumineuse relativement faible sont très décoratifs. Dans l'architecture, ils sont souvent utilisés pour l'habillement de parois, de façades,(vitrages, pavements de façade) en tant qu'éléments de miroir, en tant que miroirs semi-transparents ou en tant que plaques décoratives en verre. Ils peuvent également être pourvus d'une impression de décoration supplémentaire et/ou être utilisés également, le cas échéant, sous forme courbée, flambée. S' ils sont utilisés en tant que vitres en verre monolithiques, la couche superficielle est exposée sans protection quelconque à l'atmosphère, de sorte qu'elle doit présenter une capacité de résistance particulièrement élevée vis-à-vis des influences atmosphériques. Pour des raisons de sécurité et/ou en vue de l'augmentation de leur résistance à la flexion et aux impacts, les substrats en verre revêtus destinés à ces cas d'application sont souvent précontraints par voie thermique, c'est-à-dire chauffées à une température supérieure à 600°C et ensuite très rapidement refroidies. Le système de couches réfléchissant doit aussi surmonter sans dommages cette sollicitation thermique, les propriétés, en particulier esthétiques, des vitres en verre revêtues ne devant pas être perturbées de ce fait.

On connaît par le document US 5 085 926 un substrat comprenant une première couche d'un oxyde de Ti, Zr, Sn, ou Cr, une seconde couche d'un nitrure de Ti, Zr, Ta, Cr, Ni-Cr, ou acier inoxydable, une troisième couche métallique en Ti, Zr, Ta, Cr, Ni-Cr, ou acier inoxydable et une quatrième couche en nitrure de Ti, Zr, Ta, Cr, Ni-Cr, ou acier inoxydable.

On connaît, à partir du document EP 0 962 429 A1, une vitre en verre à résistance thermique élevée ayant un système de couches du genre cité au début, qui remplit ces exigences. Dans le cas de ce système de couches connu, la couche de base diélectrique se compose de SiO₂, de Al₂O₃, de SiON, de Si₃N₄ ou de AIN ou bien d'un mélange d'au moins deux de ces matériaux. Ces matériaux ne peuvent être appliqués sur la vitre en verre sans exception qu'à raison d'un taux de pulvérisation cathodique relativement faible et/ou qu'à renfort d'un effort technologique relativement élevé. Parce que les installations de revêtements industrielles fonctionnent, pour des raisons économiques, à des vitesses de défilement aussi élevées que possible, la couche de base ne peut donc être appliquée, dans le cas des installations habituelles, qu'à raison d'une épaisseur relativement faible. Une épaisseur plus importante de la couche de base peut toutefois être souhaitée en tant que couche d'interférences pour modifier l'impression colorée de la vitre en verre tant en termes de réflexion du côté verre qu'en termes de transmission.

On connaît, à partir du document EP 0 436 045 A1, également un système de couches capable de courbure et/ou de contrainte préalable, ayant une couche de chrome en tant que couche de réflexion. Dans ce cas, la couche de finition se compose toutefois d'un alliage de A1 avec Ti et/ou de Zr.

Grâce à une couche de finition de ce genre, la capacité de réflexion élevée de la couche de chrome du côté couche se perd et la réflexion sur le côté verre atteint au maximum une valeur de 50%. La couche de base se compose en l'occurrence de TiO₂, de Ta₂O₅, de ZrO₂ ou de SiO₂. La couche de base doit certes, en l'occurrence, pouvoir être déposée à raison d'une épaisseur telle qu'elle agisse en tant que couche d'interférence modifiant la couleur, l'augmentation de l'épaisseur de couche étant en revanche limitée pour ces matériaux pour des raisons technologiques et économiques.

Dans le document EP 0 536 607 B1, on décrit des vitres en verre revêtues à aspect métallique, dont les revêtements transparents sont également appropriés à un traitement thermique. La couche aux propriétés métalliques se compose toutefois dans ce cas d'un composé métallique, à savoir d'un borure métallique, d'un carbure métallique d'un nitrure métallique ou d'un oxynitrure métallique. Ces composés métalliques ne possèdent pas en réflexion lumineuse la même brillance que des couches purement métalliques. Sur cette couche est disposée une couche de protection métallique, par exemple en chrome, qui est oxydée lors du traitement thermique. Les empilements de couches décrits dans cette publication sont, en premier lieu, des empilements à transparence élevée et l'utilisation de la réflexion métallique sur les deux côtés des vitres en verre pour des raisons décoratives ne joue aucun rôle dans le cas de ces empilements de couches.

Il est souhaitable de faire en sorte que l'impression de couleur de la lumière réfléchie par action interférentielle de la couche de base soit réglable de manière ciblée, sans être obligé dans cette optique de faire des prouesses technologiques ou de diminuer la vitesse de défilement de la vitre en verre dans une installation de revêtement travaillant en continu. Un empilement de couches de ce genre devrait présenter une résistance à la corrosion (mécanique, chimique) et une dureté élevées et devrait conserver, après un processus de traitement thermique de type bombage, trempe, recuit, ses propriétés, en particulier une réflexion lumineuse élevée et pour l'essentiel neutre en couleur du côté de la couche et une transmission se situant dans le domaine compris entre 2 et 15 %.

L'objet de l'invention est d'indiquer un empilement de couches amélioré du genre cité au début, ayant une réflexion métallique élevée sur les deux côtés des vitres en verre ainsi revêtues.

Cet objet est résolu selon l'invention grâce aux caractéristiques de la revendication 1. Les revendications secondaires fournissent des perfectionnements avantageux à l'objet de la présente invention.

La couche de base diélectrique se compose en conséquence au moins d'une couche partielle oxydée, voisine de la surface du verre, ayant un indice de réfraction ≥ 2,0, et d'une couche partielle nitrurée contiguë ou non de la couche métallique.

Une couche de base à base simplement d'un oxyde facilement pulvérisable par pulvérisation cathodique à elle seule n'a pas fait ses preuves, parce qu'il s'est avéré que, dans ce cas, la couche de chrome métallique subit une modification de couleur pendant le traitement thermique ou est même détruite. Ce risque est complètement éliminé par la formation de couches multiples selon l'invention de la couche de base, durant laquelle on dispose immédiatement sous la couche métallique, une mince couche partielle en nitrure métallique. Grâce à l'agencement de la deuxième couche partielle, contiguë de la surface du verre à base d'un oxyde métallique facilement pulvérisable par pulvérisation cathodique, ayant un indice de réfraction d'au moins 2.0, il n'y a pas de perturbation de la résistance thermique de l'empilement de couches. L'aspect en réflexion lumineuse (couleur, intensité de la couleur) de la lumière réfléchie peut être modifié d'une manière simple dans de larges limites. La vitesse de défilement des vitres en verre à travers l'installation de revêtement ne doit, cependant, pas être substantiellement diminuée. Des couches partielles oxydées de ce genre peuvent être déposées sans problème à raison d'une épaisseur allant jusqu'à 90 nm, de sorte que l'on dispose d'un jeu considérable pour l'aspect en réflexion lumineuse que l'on peut obtenir.

La couche partielle nitrurée de la couche de base diélectrique se compose de Si₃N₄ et/ou de AlN (pouvant éventuellement contenir des éléments minoritaires (Al, Bore..) qui sont des dopants des cibles) et présente une couche d'au moins 10 nm. La ou les couches partielles oxydées de la couche de base diélectrique est ou (sont) à base de préférence de SnO₂ et/ou de ZnO et/ou de TiO₂ et/ou de Nb₂O₅, et/ou de ZnO₂, et présente(nt) une épaisseur allant de 30 à 90 nm.

Une brillance particulièrement élevée des vitres en verre revêtues est obtenue grâce à l'utilisation de chrome pur pour la couche métallique à réflexion élevée. Grâce à des couches de chrome pures, on est en mesure de parvenir à des degrés de réflexion dans le domaine visible du spectre allant jusqu'à 60%. En tant qu'alliages métalliques contenant du chrome sont toutefois également appropriés des alliages de CrA1 ayant 75-80% en poids de Cr, des alliages de CrSi ayant 45-85% en poids de Cr et des alliages de CrAlSi ayant 70-80% en poids de Cr.

A titre d'exemple, les modes opératoires permettant d'obtenir les couches d'oxydes métalliques et les couches nitrurées sont les suivants :
- si le dépôt est réactif, à partir de la cible de métal sous oxydée (cas des couches métalliques), à partir de la cible de métal de Si (éventuellement dopée avec du A1 ou du Bore), ou une cible sous nitrurée (cas des couches nitrurées)
- si le dépôt est non réactif, il peut s'agit de cibles céramiques (cas des couches métalliques), à partir d'uen cible nitrurée (cas des couches nitrurées).

Dans un perfectionnement avantageux de l'invention, on dispose, sur la couche de recouvrement nitrurée de l'empilement de couches, une couche de protection épaisse de 1 à 3 nm en un métal ou un alliage métallique comme Zr, Ti, TiCr, ZrCr ou TiNi. Cette couche de protection métallique est convertie, lors du traitement thermique, de manière à former une couche d'oxydes correspondante.

Les empilements de couches selon l'invention peuvent être appliqués sur les vitres en verre en tant que couches intégrales adhérant les unes aux autres sur toute leur surface. On peut obtenir des effets particulièrement esthétiques quand l'empilement de couches réfléchissant est appliqué sur la surface du verre en tant que couche discontinue sous la forme d'une décoration ou d'un motif ou si des motifs ou des décorations par exemple faites d'une couleur à cuire sont imprimés sur le côté revêtu de la vitre en verre. La couleur à cuire peut être recuite à la suite du processus de traitement thermique.

Des avantages et des détails supplémentaires de l'invention ressortent de la description qui suit de trois exemples de réalisation, auxquels l'on oppose deux exemples comparatifs conformément à l'état de la technique.

En tant qu'essais destinés à l'évaluation de la résistance à la corrosion de l'empilement de couches, l'on a effectué l'essai "au brouillard salin", conformément à la norme ISO 9227, l'essai "SO₂" conformément à la norme DIN 50018, l'essai "d'abrasion Taber", conformément à la norme DIN EN 1096-1;-2, l'essai "à l'eau de sudation", conformément à la norme DIN 50017 et l'essai "Cass", conformément à la norme ISO 9227. Les mesures de la transmission Tᵥᵢₛ et de la réflexion Rᵥᵢₛ, dans le domaine visible du spectre, ainsi que des coordonnées de couleur a* et b*, en vue de la détermination de la couleur de réflexion, ont été effectuées conformément à la norme DIN 5033.

### Exemple comparatif 1

Dans une installation industrielle de pulvérisation cathodique, l'on procède au revêtement, conformément au procédé de la pulvérisation cathodique à assistance magnétique, de vitres en verre flotté, épaisses de 6 mm, ayant les dimensions superficielles de 6 x 3,21 m², à l'aide de l'empilement de couches : verre - 10 nm de SiO₂ - 35 nm de Cr - 6 nm de Si₃N₄. Des échantillons recueillis sur la largeur des vitres en verre ont donné les valeurs de réflexion Rᵥᵢₛ et les valeurs de transmission Tᵥᵢₛ suivantes:

| | | |
|---|---|---|
| Rᵥᵢₛ: | | |
| - côté couche | | 57,0% |
| - côté verre | | 48,7 % |
| Tᵥᵢₛ: | | 2,5% |
| Couleur de réflexion (système laboratoire) | | |
| - côté couche | a* | -0,36 |
| | b* | 1,43 |
| - côté verre | a* | -0,53 |
| | b* | 0,32 |

Les couleurs de réflexion sur le côté verre et sur le côté couche sont presque identiques, le côté couche présentant cependant une légère coloration jaunâtre, ce qui se reconnaît également à la valeur positive b* de 1,43.

Les essais relatifs à la résistance à la corrosion et à la dureté de la couche ont donné les résultats suivants:

| | |
|---|---|
| Essai au brouillard salin: | réussi |
| Essai SO₂: | réussi |
| Essai d'abrasion Taber: | réussi |
| Essai à l'eau de sudation: | réussi |
| Essai Cass: | réussi |

### Exemple comparatif 2

Sur la même installation de pulvérisation cathodique que celle utilisée dans le cas de l'exemple comparatif 1, l'on a tenté de procéder au revêtement des vitres en verre à l'aide du même empilement de couches, toutefois avec une couche de base d'une épaisseur telle que la couleur de réflexion sur le côté verre soit bleue. Il a fallu, dans ce but, appliquer la couche de base de SiO₂ à raison d'une épaisseur de 100 nm. En dépit de l'utilisation de cathodes spéciales en Si, il n'a été possible de réaliser la fabrication de la couche de base épaisse de 100 nm qu'à l'aide d'une vitesse de défilement de la vitre en verre substantiellement réduite.

La mesure des propriétés optiques a donné les valeurs suivantes:

| | | |
|---|---|---|
| Rᵥᵢₛ: | | |
| - côté couche | | 57,3% |
| - côté verre | | 28,3 % |
| Tᵥᵢₛ: | | 3,0% |
| Couleur de réflexion (système laboratoire) | | |
| Côté couche | a* | -0,5 |
| | b* | +1,5 |
| Côté verre | a* | -1,1 |
| | b* | -8,3 |

Par rapport à l'exemple comparatif 1, il y a une forte diminution de la réflexion sur le côté verre. La productivité est en outre considérablement abaissée lors du revêtement. Tous les essais de corrosion et de dureté ont, par contre, été réussis sans problème, tout comme dans le cas de l'exemple comparatif 1.

### Exemple de réalisation 1

Sur la même installation de pulvérisation cathodique de grande taille, l'on a réalisé l'empilement de couches selon l'invention suivant: verre - 58 nm de SnO₂ - 17 nm de Si₃N₄ - 35 nm de Cr - 6 nm de Si₃N₄ - 2 nm de Zr. On a extrait de la vitre en verre revêtue sur la largeur de la vitre divers échantillons. Les échantillons ont été soumis à untraitement par voie thermique. La mesure des propriétés optiques sur les échantillons contraints au préalable a donné les valeurs suivantes:

| | | |
|---|---|---|
| Rᵥᵢₛ: | | |
| - côté couche | | 57,4% |
| - côté verre | | 30,0 % |
| Tᵥᵢₛ: | | 3,5% |
| Couleur de réflexion (système laboratoire) | | |
| - Côté couche | a* | 0,13 |
| | b* | 4,03 |
| - Côté verre | a* | -0,01 |
| | b* | -0,96 |

Tous les essais de corrosion et de dureté ont été réussis sans problème. Sur le côté verre apparaît une couleur de réflexion neutre et sur le côté couche apparaît une réflexion particulièrement élevée ayant une teinte jaune chaude et agréable.

### Exemple de réalisation 2

Dans le même cycle d'essais, l'on a réalisé, dans des conditions d'essai par ailleurs identiques, par mise en place d'une cathode supplémentaire, l'empilement de couches selon l'invention suivant: verre - 42 nm de SnO₂ - 8 nm de ZnO - 17 nm de Si₃N₄ - 17 nm de Cr - 18,5 nm de Si₃N₄ - 2 nm de Zr.

Les propriétés otiques suivantes ont été déterminées:

| | | |
|---|---|---|
| Rᵥᵢₛ: | | |
| - côté couche | | 38,4% |
| - côté verre | | 19,0% |
| Tᵥᵢₛ: | | 14,0% |
| Couleur de réflexion (système laboratoire) | | |
| - Côté couche | a* | -0,39 |
| | b* | 16,8 |
| - Côté vitre en verre | a* | -0,86 |
| | b* | -11,6 |

Tous les essais de corrosion et de dureté ont été réussis sans problème. Sur le côté verre, la couleur de réflexion est d'un bleu intense, alors que, sur le côté couche, la couleur est jaune. Un élément de vitre de ce genre peut être utilisé en tant que miroir semi-transparent par exemple en tant que porte en verre intégral, un côté apparaissant en réflexion bleu et l'autre côté apparaissant jaune.

### Exemple de réalisation 3

Sur l'installation de pulvérisation cathodique de grande taille, l'on a préparé, dans des conditions d'essai par ailleurs identiques, l'empilement de couches selon l'invention suivant et l'on a déterminé les propriétés de couches: verre - 56 nm de SnO₂ - 34 nm de Si₃N₄ - 35 nm de Cr - 6 nm de Si₃N₄ - 2 nm de Zr.

La détermination des propriétés optiques a donné les valeurs suivantes:

| | | |
|---|---|---|
| Rᵥᵢₛ: | | |
| - côté couche | | 55,5% |
| - côté verre | | 39,5% |
| Tᵥᵢₛ: | | 2,5% |
| Couleur de réflexion (système laboratoire) | | |
| - Côté couche | a* | 0,13 |
| | b* | 3.98 |
| - Côté verre | a* | -6,53 |
| | b* | -2,0 |

Tous les essais de corrosion et de dureté ont été réussis sans problème. L'élément de verre apparaît en réflexion sur le côté verre, vert-bleu et, sur le côté couche, il possède une réflexion élevée à teinte jaunâtre. Un élément en verre de ce genre peut être utilisé par exemple, avec le côté verre tourné vers l'extérieur, en tant qu'élément de façade, le côté couche n'ayant à remplir, dans ce cas, aucune fonction décorative.

## Revendications

1. Substrat transparent ayant un empilement de couches minces à réflexion métallique, à résistance thermique élevée, en particulier adapté pour être traité thermiquement (bombage, trempe, recuit), qui comprend une couche de base diélectrique, une couche métallique à réflexion élevée, en chrome ou en un alliage métallique contenant au moins 45% en poids de chrome, et une couche de recouvrement nitrurée diélectrique, **caractérisé en ce que** la couche de base diélectrique se compose de couches multiplies, d'au moins une couche partielle oxydée, contiguë ou non du substrat transparent, ayant un indice de réfraction ≥ 2,0, et d'une couche partielle nitrurée contiguë de la couche métallique, la couche partielle nitrurée présentant une épaisseur d'au moins 10 nm et étant à base de Si₃N₄ et/ou de AlN, et éventuellement des éléments minoritaires.

2. Substrat selon la revendication 1, **caractérisé en ce que** la ou les couches partielles oxydées de la couche de base diélectrique est (sont)à base de SnO₂ et/ou de ZnO et/ou de TiO₂.

3. Substrat selon la revendication 1 ou 2, **caractérisé en ce que** la ou les couches partielles oxydées de la couche de base diélectrique présente(nt) une épaisseur d'en tout 30 à 90 nm.

4. Substrat selon l'une quelconque des revendications 1 à 3, **caractérisé en ce que** l'alliage contenant le chrome est un alliage de CrAl ayant 75-80% en poids de Cr, un alliage de CrSi ayant 45-85% en poids de Cr ou un alliage de CrAlSi ayant 70-80% en poids de Cr.

5. Substrat selon l'une quelconque des revendications 1 à 4, **caractérisé en ce que** la couche métallique en chrome ou en un alliage de chrome présente une épaisseur de 15 à 50 nm.

6. Substrat selon l'une quelconque des revendications 1 à 5, **caractérisé en ce que** l'on dispose, sur la couche de recouvrement nitrurée, une couche de protection, épaisse de 1 à 3 nm, en un métal ou un alliage métallique comme Zr, Ti, TiCr, ZrCr ou TiNi, qui est convertie, après le traitement thermique du substrat ainsi revêtu, en une couche d'oxydes correspondante.

7. Substrat selon l'une quelconque des revendications 1 à 6, **caractérisé en ce que** la couche de recouvrement nitrurée est à base de Si₃N₄ et/ou de AlN et présente une épaisseur d'au moins 6 nm.

8. Substrat selon l'une quelconque des revendications 1 à 7, **caractérisé en ce que** l'empilement de couches est appliqué sur le substrat en tant que revêtement continu.

9. Substrat selon l'une quelconque des revendication 1 à 7, **caractérisé en ce que** l'empilement de couches est appliqué sur le substrat en tant que couche discontinue sous la forme d'une décoration ou d'un motif.

10. Substrat selon l'une quelconque des revendications 1 à 9, **caractérisé en ce que** le substrat ainsi revêtu est soumis par voie thermique à un traitement mécanique ou chimique.

## Claims

1. A transparent substrate having a multilayer coating comprising thin layers for metallic reflection and for high thermal resistance, this substrate being in particular suitable for being heat-treated (bending, toughening, annealing), which comprises a dielectric base layer, a metal layer having a high reflection, made of chromium or a metal alloy containing at least 45 wt% chromium and a dielectric nitride covering layer, **characterized in that** the dielectric base layer is composed of multiple layers, of at least one oxide partial layer, which may or may not be contiguous with the transparent substrate, having a reflective index ≥ 2.0, and of a nitride partial layer contiguous with the metal layer, the nitride partial layer having a thickness of at least 10 nm and being based on Si₃N₄ and/or AlN, and optionally on minority elements.

2. The substrate as claimed in claim 1, **characterized in that** the oxide partial layer or layers of the dielectric base layer is (are) based on SnO₂ and/or ZnO and/or TiO₂.

3. The substrate as claimed in claim 1 or 2, **characterized in that** the oxide partial layer or layers of the dielectric base layer has (have) an overall thickness of 30 to 90 nm.

4. The substrate as claimed in any one of claims 1 to 3, **characterized in that** the chromium-containing alloy is a CrAl alloy containing 75-80 wt% Cr, a CrSi alloy containing 45-85 wt% Cr or a CrAlSi alloy containing 70-80 wt% Cr.

5. The substrate as claimed in any one of claims 1 to 4, **characterized in that** the chromium or chromium alloy metal layer has a thickness of 15 to 50 nm.

6. The substrate as claimed in any one of claims 1 to 5, **characterized in that** a 1 to 3 nm thick protective layer made of a metal or a metal alloy, such as Zr, Ti, TiCr, ZrCr or TiNi, is placed on the nitride covering layer, which protective layer is converted, after the heat treatment of the substrate thus coated, into a corresponding oxide layer.

7. The substrate as claimed in any one of claims 1 to 6, **characterized in that** the nitride covering layer is based on Si₃N₄ and/or AlN and has a thickness of at least 6 nm.

8. The substrate as claimed in any one of claims 1 to 7, **characterized in that** the multilayer coating is applied to the substrate as a continuous coating.

9. The substrate as claimed in any one of claims 1 to 7, **characterized in that** the multilayer coating is applied to the substrate as a discontinuous layer in the form of a decoration or pattern.

10. The substrate as claimed in any one of claims 1 to 9, **characterized in that** the substrate thus coated is heat-treated in a mechanical or chemical treatment.

## Patentansprüche

1. Transparentes Substrat aufweisend einen Dünnschichtstapel mit metallischer Reflexion, mit hoher Hitzbeständigkeit, im Besonderen geeignet zur Wärmebehandlung (Wölbung, Abschreckhärtung, Glühen), umfassend eine dielektrische Basisschicht, eine Metallschicht mit hoher Reflexion, aus Chrom oder einer mindestens 45 Gew,-% Chrom enhaltenden Metallegierung, und eine dielektrische nitridierte Überdeckungsschicht, **dadurch gekennzeichnet, dass** die dielektrische Basisschicht aus mehrfachen Schichten, aus mindestens einer oxidierten Teilschicht, die dem transparenten Substrate benachbart angeordnet sein mag oder nicht, mit einem Brechungsindex ≥ 2,0, und aus der Metallschicht benachbart angeordneten nitridierten Teilschicht besteht, wobei die nitridierte Teilschicht eine Dicke aus mindestens 10 nm aufweist und auf Si₃N₄ und/oder AIN und eventuell in der Minderheit befindliche Elemente basiert ist.

2. Substrat nach Anspruch 1, **dadurch gekennzeichnet, dass** die oxidierte(s) Teilschicht(en) der dielektrischen Basisschicht auf SnO₂ und/oder ZnO und/oder TiO₂ ist (sind).

3. Substrat nach Anspruch 1 oder 2, **dadurch gekennzeichnet, dass** die oxidierte(s) Teilschicht(en) der dielektrischen Basisschicht eine gesamte Dicke von 30 bis 90 nm aufweist(weisen).

4. Substrat gemäß einem der Ansprüche 1 bis 3, **dadurch gekennzeichnet, dass** die chromhaltige Legierung eine CrAI-Legierung mit 75-80% Gew.-% Cr, eine CrSi-Legierung mit 45-85% Gew.-% Cr oder eine CrAlSi-Legierung mit 70-80% Gew.-% Cr ist.

5. Substrat gemäß einem der Ansprüche 1 bis 4, **dadurch gekennzeichnet, dass** die Metallschicht aus Chrom beziehungsweise einer Chromlegierung eine Dicke von 15 bis 50 nm aufweist.

6. Substrat gemäß einem der Ansprüche 1 bis 5, **dadurch gekennzeichnet, dass** auf die nitridierte Überdeckungsschicht eine 1 bis 3mm dicke Schutzschicht aus Metall beziehungsweise aus einer Metallegierung wie Zr, Ti, TiCr, ZrCr oder TiNi aufgetragen wird, die nach der Wärmebehandlung des so überzogenen Substrates in eine entsprechende Oxidschicht umgewandelt wird.

7. Substrat gemäß einem der Ansprüche 1 bis 6, **dadurch gekennzeichnet, dass** die nitridierte Überdeckungsschicht auf Si₃N₄ und/oder AIN basiert ist und eine Dicke von mindestens 6 mm aufweist.

8. Substrat gemäß einem der Ansprüche 1 bis 7, **dadurch gekennzeichnet, dass** der Schichtstapel als eine durchgehende Verkleidung auf das Substrat aufgetragen wird.

9. Substrat gemäß einem der Ansprüche 1 bis 7, **dadurch gekennzeichnet, dass** der Schichtstapel als eine unterbrochene Schicht in der Form einer Verzierung beziehungsweise eines Muster auf das Substrat aufgetragen wird.

10. Substrat gemäß einem der Ansprüche 1 bis 9, **dadurch gekennzeichnet, dass** das so überzogene Substrat einer mechanischen beziehungsweise chemischen Behandlung thermischerweise unterworfen wird.
